# EUROPEAN PATENT APPLICATION

(11) **EP 4 807 389 A1**
(43) Date of publication of application: **16.09.2026**
(21) Application number: 25163225.3
(22) Date of filing: 12.03.2025
(51) Int. Cl.: G01S 7/00, G01S 7/35, H01Q 21/00, G01S 13/34

(54) **RADAR SYSTEMS AND METHOD OF OPERATING RADAR SYSTEMS**

(71) Applicant: Xavveo GmbH, 13355 Berlin (DE)
(72) Inventor: KEIL, Ulrich, 12249 Berlin (DE); MEISTER, Stefan, 12587 Berlin (DE); OTTE, Sven, 16540 Hohen Neuendorf (DE)
(74) Representative: Fischer, Uwe

(57) **Abstract**

An exemplary embodiment of the invention relates to a radar system (10) comprising a central unit (100), a first radar antenna (215), and a second radar antenna (215), wherein a first detection signal (IF_1) representing first radar information from the first antenna (215) and a second detection signal (IF_2) representing second radar information from the second antenna (215) are transmitted to the central unit (100). According to the invention, the system (10) is configured to send the first detection signal (IF_1) and the second detection signal (IF_2) optically to the central unit (100) via optical backchannel radiation (OFR) that is transmitted through the same optical backchannel waveguide (600), wherein the first detection signal (IF_1) is transmitted in a first frequency range defined by a first electrical carrier frequency (fc_1)), wherein the second detection signal (IF_2) is transmitted in a second frequency range defined by a second electrical carrier frequency (fc_2)) which differs from the first electrical carrier frequency (fc_1)), and wherein the central unit (100) is configured to receive the optical backchannel radiation (OFR) and distinguish the first detection signal (IF_1) from the received second detection signal (IF_2) based on their respective carrier frequencies (fc_1, fc_2)).

## Description

The present invention relates to radar systems.

### Background of the invention

German Patent DE 10 2022 201 312 B4 discloses a radar system that comprises a central unit. The central unit is configured to be connected to a plurality of radar transmission units and a plurality of radar reception units. The central unit comprises an electro-optical modulator, an optical emitter, and an electrical signal generator.

### Objective of the present invention

An objective of the present invention is to provide a radar system with an optimized backchannel for transmitting radar information from the radar reception units to the central unit.

### Brief summary of the invention

An exemplary embodiment of the present invention relates to a radar system comprising a central unit, a first radar antenna, and a second radar antenna, wherein a first detection signal representing first radar information from the first antenna and a second detection signal representing second radar information from the second antenna are transmitted to the central unit. The system is configured to send the first detection signal and the second detection signal optically to the central unit via optical backchannel radiation that is transmitted through the same optical backchannel waveguide, wherein the first detection signal is transmitted in a first frequency range defined by a first electrical carrier frequency, wherein the second detection signal is transmitted in a second frequency range defined by a second electrical carrier frequency which differs from the first electrical carrier frequency, and wherein the central unit is configured to receive the optical backchannel radiation and distinguish the first detection signal from the received second detection signal based on their respective carrier frequencies.

An advantage of the latter embodiment is that the radar information is transmitted via the same optical backchannel waveguide instead of a plurality of waveguides.

The optical backchannel waveguide may include an optical fiber.

The optical backchannel radiation may comprise a first portion having a first optical wavelength and a second portion having a second optical wavelength, wherein the first detection signal is transmitted in the first portion, and wherein the second detection signal is transmitted in the second portion.

The first radar antenna may be located in a first reception unit and the second radar antenna may be located in a second reception unit.

A first supply waveguide may supply the first reception unit with a first optical radiation having a first optical wavelength.

A second supply waveguide may supply the second reception unit with a second optical radiation having a second optical wavelength.

The first reception unit may be configured to modulate the first detection signal onto the first optical radiation, thereby generating a first modulated optical signal.

The second reception unit may be configured to modulate the second detection signal onto the second optical radiation, thereby generating a second modulated optical signal.

An optical combiner preferably combines the first modulated optical signal and the second modulated optical signal, thereby generating said optical backchannel radiation that is transmitted through the backchannel waveguide to the central unit.

The first optical radiation may be generated by a first optical radiation emitter (e.g. CW laser) that is integrated into the first reception unit. Alternatively, the first optical radiation emitter may be integrated into the central unit. In this case, the optical radiation serves as read-out radiation, and the first optical radiation emitter may be referred to as the first read-out radiation source. The optical radiation from the first read-out radiation source is preferably delivered to the first reception unit via a first supply waveguide.

The second optical radiation may be generated by a second optical radiation emitter (e.g. CW laser) that is integrated into the second reception unit. Alternatively, the second optical radiation emitter may be integrated into the central unit. In this case, the optical radiation serves as read-out radiation, and the second optical radiation emitter may be referred to as the second read-out radiation source. The optical radiation from the second read-out radiation source is preferably delivered to the second reception unit via a second supply waveguide.

The first optical radiation that is supplied by the first supply waveguide, may already be modulated with the first electrical carrier frequency. The second optical radiation that is supplied by the second supply waveguide, may already be modulated with the second electrical carrier frequency.

Alternatively, the first reception unit may be configured to modulate both the first detection signal and the first electrical carrier frequency onto the first optical radiation and/or the second reception unit may be configured to modulate both the second detection signal and the second electrical carrier frequency onto the second optical radiation.

The central unit may comprise at least one optical driver source that provides optical radiation carrying a radar reference signal, said radar reference signal being transmitted to said radar reception units.

The central unit may comprise a photodetector for detecting the optical backchannel radiation and generating an electrical backchannel signal, the electrical backchannel signal comprising the first detection signal and the second detection signal.

The central unit may comprise an electrical signal demodulator for separating the first detection signal from the second detection signal based on the first and second electrical carrier frequency.

The first detection signal may describe the frequency difference between the radar reference signal and the radar radiation detected by the first antenna.

The second detection signal may describe the frequency difference between the radar reference signal and the radar radiation detected by the second antenna.

The first and second detection signal may be subjected to analog-digital conversion before transmission via the optical backchannel radiation that is transmitted through said same optical backchannel waveguide.

The first and second reception unit may belong to a plurality of reception units each of which has one or more antennas.

An individual electrical carrier frequency is preferably assigned to each antenna.

The optical backchannel radiation that is transmitted through the backchannel waveguide, preferably comprises an individual optical wavelength for each reception unit.

Each reception unit preferably sends the detection signal of its antenna to the combiner via unit-individual optical radiation that has the individually assigned optical wavelength and is modulated based on both the detection signal of its antenna and the corresponding electrical carrier frequency.

The combiner preferably forms the optical backchannel radiation that is transmitted through the same optical backchannel waveguide.

One or more of the reception units may have two or more antennas, wherein each reception unit sends the detection signals of its antenna or antennas to the central unit via unit-individual radiation that has the individually assigned optical wavelength and is modulated based on both the detection signals and the corresponding electrical carrier frequencies of its antennas.

The first and second reception unit, said combiner, said optical backchannel waveguide, said photodetector for detecting the optical backchannel radiation, and said demodulator for separating the detection signals based on their carrier frequencies may define a first cluster.

The radar system may comprise one or more further clusters, each of which includes a first and second reception unit, a combiner, an optical backchannel waveguide, a photodetector for detecting optical backchannel radiation, and a demodulator for separating the detection signals based on their carrier frequencies.

Preferably each reception unit of each cluster has an antenna, wherein - with respect to each cluster - an individual electrical carrier frequency is assigned to each antenna of the respective cluster, wherein - with respect to each cluster - the optical radiation that is transmitted through the backchannel waveguide of the respective cluster, preferably comprises an individual optical wavelength for each reception unit of the respective cluster, wherein each reception unit preferably sends the detection signal of its antenna(s) to the combiner of the respective cluster via unit-individual optical radiation that has the individually assigned optical wavelength and is modulated based on both the detection signal of its antenna(s) and the corresponding electrical carrier frequency, and wherein the combiner of the respective cluster preferably forms the optical backchannel radiation of the respective cluster that is transmitted through the same optical backchannel waveguide of the respective cluster.

The first read-out radiation source preferably provides the first optical radiation to the first reception units of all of said clusters.

The second read-out radiation source preferably provides the second optical radiation to the second reception units of all of said clusters.

The optical driver source preferably provides the optical radiation carrying the radar reference signal to the first and second reception unit of all of said clusters.

Another exemplary embodiment of the invention relates to a method of operating a radar system, for instance a radar system as described above, wherein a first detection signal representing first radar information is transmitted from a first antenna and a second detection signal representing second radar information is transmitted from a second antenna to the central unit. The first detection signal and the second detection signal are optically transmitted to the central unit via optical backchannel radiation that is transmitted through the same optical backchannel waveguide, wherein the first detection signal is transmitted in a first frequency range defined by a first electrical carrier frequency, wherein the second detection signal is transmitted in a second frequency range defined by a second electrical carrier frequency which differs from the first electrical carrier frequency, and wherein the central unit is configured to receive the optical backchannel radiation and distinguish the first detection signal from the received second detection signal based on their respective carrier frequencies.

The radar system may be a FMCW- (Frequency Modulated Continuous Wave) radar system. The central unit may be configured to evaluate a frequency shift between emitted radar radiation and received radar radiation, in order to determine distances and/or speed.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Fig. 1-4: depict exemplary embodiments of a radar system according to the present invention,
- Fig. 5: depicts another exemplary embodiment of a reception unit suitable for any of the radar systems shown in Figures 1-4,
- Figure 6: depicts an exemplary embodiment of a modulation signal that may serve as a radar driver signal and a radar reference signal, and
- Figure 7: exemplarily depicts the amplitude or intensity of detection signals modulated on different carrier frequencies.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

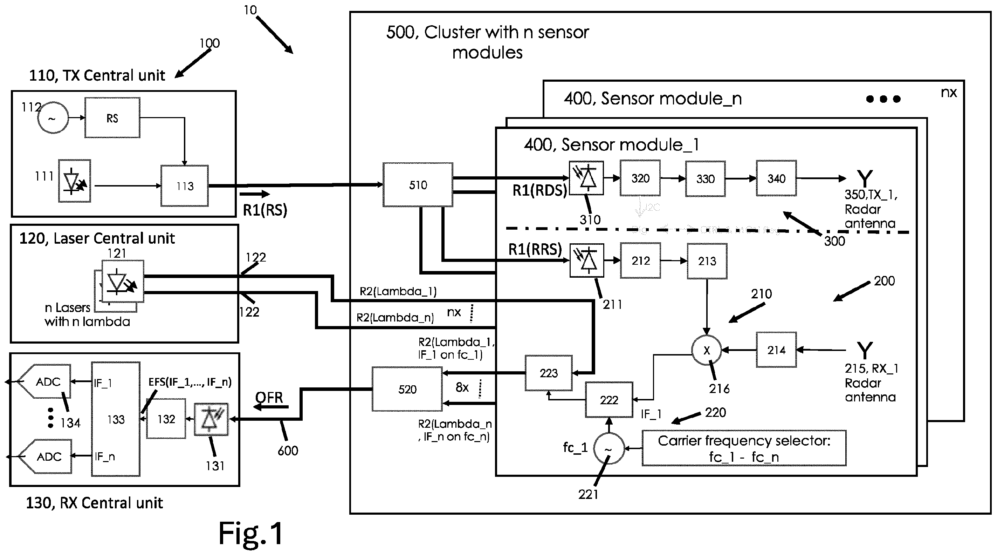

Figure 1 depicts a first exemplary embodiment of a radar system 10 according to the present invention.

A central unit 100 of the radar system 10 comprises a first subunit 110 (also called TX Central unit), a second subunit 120 (also called Laser Central unit) and a third subunit 130 (also called RX Central unit). The subunits may be located at the same place close to each other or at different places.

The first subunit 110 acts as an optical driver source, providing modulated optical radiation R1 carrying a modulating signal, for instance a frequency ramp signal RS. To this end, the optical driver source comprises a radiation source 111 (e.g. a continuous wave (CW) laser), an electrical signal generator 112 and an electro-optical modulator 113. The signal generator 112 may generate a ramp signal RS.

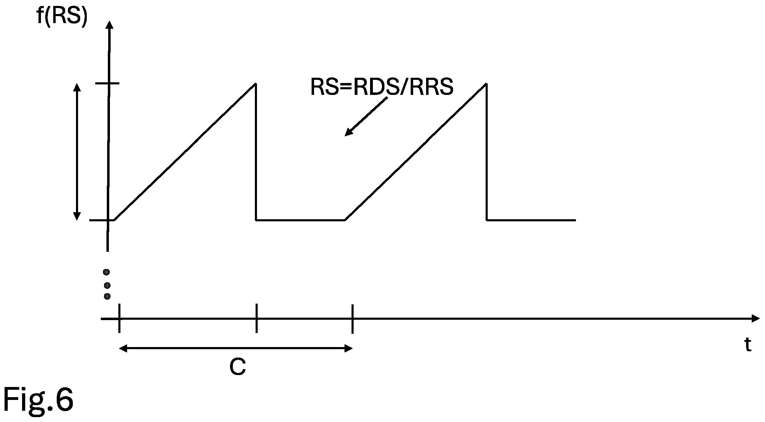

An exemplary embodiment of the electrical ramp signal RS is shown in Figure 6. The frequency f of the periodic electrical ramp signal RS continuously increases or decreases over time t at least during an active segment of each periodic cycle C. In response to the ramp signal RS the electro-optical modulator 113 modulates the radiation of the optical radiation source 111, thereby incorporating the ramp signal RS into the optical radiation and outputting the modulated optical radiation R1.

The second subunit 120 comprises n (n>1, e.g. n=8) read-out radiation sources 121. The read-out radiation sources 121 may be continuous wave lasers. The purpose of the read-out radiation sources 121 is to provide optical radiation that enables the reading of radar information from reception modules 200, as will be explained in detail below.

Each read-out radiation source 121 provides an optical radiation R2 having an individual wavelength Lambda _1,...,Lambda_n. The wavelengths Lambda_1,...,Lambda_n differ from one another.

Each read-out radiation source 121 is connected via an individual supply waveguide 122 to an assigned reception module 200. In the exemplary embodiment of Figure 1, each of the n reception modules 200 is combined with an individually assigned transmission module 300 to form a sensor module 400. The resulting n sensor modules 400 are assigned to a cluster 500.

The pairwise assignment of transmission modules 300 and reception modules 200 to sensor units 400, as shown in Figure 1, is not mandatory. For instance, some sensor units may lack a transmission module 300, some may lack a reception module 200, and some may have more than one reception module 200.

The third subunit 130 comprises a photodetector 131 and a transimpedance amplifier 132 for detecting optical backchannel radiation OFR and generating an electrical backchannel signal EFS. The electrical backchannel signal EFS comprises detection signals IF_1,...,IF_n from the n reception modules 200. The third subunit 130 further comprises a demodulator 133 for demodulating the electrical backchannel signal EFS and extracting the detection signals IF1_1 - IF_n from the electrical backchannel signal EFS. The separated detection signals IF1_,...,IF_n may be subjected to analog-digital conversion by analog-digital converters 134.

The transmission modules 300 are connected to the optical driver source (first subunit 110) via an optical splitter 510. The transmission modules 300 use the frequency ramp signal RS as a radar driver signal RDS and generate radar radiation as known in the art. In the exemplary embodiment of Figure 1, each transmission module 300 comprises a detector 310, a transimpedance amplifier 320, a multiplier 330, an amplifier 340 and an antenna 350.

Each reception module 200 comprises a detection path 210 for generating its detection signal IF. The detection path 210 comprises a detector 211, a transimpedance amplifier 212, a multiplier 213, an amplifier 214, an antenna 215 and a mixer 216. The detection path 210 is also connected to the optical driver source (first subunit 110) via the splitter 510 and therefore also receives the modulated optical radiation R1 that carries the frequency ramp signal RS. The reception modules 200 use the frequency ramp signal RS as a radar reference signal RRS for generating the detection signal IF.

The detection signal IF describes the frequency difference between the radar reference signal RRS, i.e. the ramp signal RS, and the radar radiation that is detected by the antenna 215.

Each reception module 200 further comprises a reporting path 220 for transmitting its detection signal IF to the third subunit 130 of the central unit 100. The reporting path 220 comprises a frequency generator 221, a mixer 222, and a modulator 223.

The modulator 223 modulates both the detection signal IF of the respective antenna 215 and an antenna-individual electrical carrier frequency fc onto the optical radiation R2 that is received from the second subunit 120. This modulation yields a modulated optical signal that is transmitted to a combiner (optical multiplexer) 520.

The combiner 520 receives the modulated optical signals from all reception modules 200 of the cluster 500 and forms the optical backchannel radiation OFR that is transmitted through the same optical backchannel waveguide (e.g. fiber) 600 to the third subunit 130.

In the exemplary embodiment of Figure 1, the first (n=1) reception unit 200 forms a first modulated optical signal that comprises the first detection signal IF_1 in a first frequency range defined by the first electrical carrier frequency fc_1. The first modulated optical signal forms a first portion of the optical backchannel radiation OFR at a first optical wavelength Lambda_1.

In a corresponding fashion, the other reception units 200 (n>=2) of the cluster 500 form further modulated optical signals that each comprise their detection signal IF_i (i=2,...,n) in an individually assigned frequency range defined by an individually assigned electrical carrier frequency fc_i (i=2,...,n). The resulting modulated optical signals form further portions of the optical backchannel radiation OFR, each portion having an individually assigned optical wavelength Lambda_2,..., Lambda _n.

For instance, the system shown in Figure 1 may comprise a single cluster 500 having n=8 reception modules 200. Each of the reception modules may comprise a single antenna 215. An antenna-individual carrier frequency fc_i (i=1,...,n=8) is assigned to each antenna 215, resulting in n=8 carrier frequencies fc_1,.., fc_8. The combiner 520 then receives n=8 modulated optical signals.

In other words, the i-th (i=1,...,n=8) modulated optical signal comprises the i-th detection signal IF_i from the antenna 215 of the i-th reception unit 200. The i-th modulated optical signal has the i-th optical wavelength Lambda_i and comprises the detection signal IF_i in an i-th frequency range defined by the i-th electrical carrier frequency fc_i.

In case of n=8, the carrier frequencies may be for instance: fc_1 = 0.5 GHz, fc_2 = 1.0 GHz, fc_3 = 1.5 GHz, fc_4 = 2.0 GHz, fc_5 = 2.5 GHz, fc_6 = 3.0 GHz, fc_7 = 3.5 GHz, and fc_8 = 4.0 GHz. The bandwidth the detection signals IF is preferably about 100 MHz.

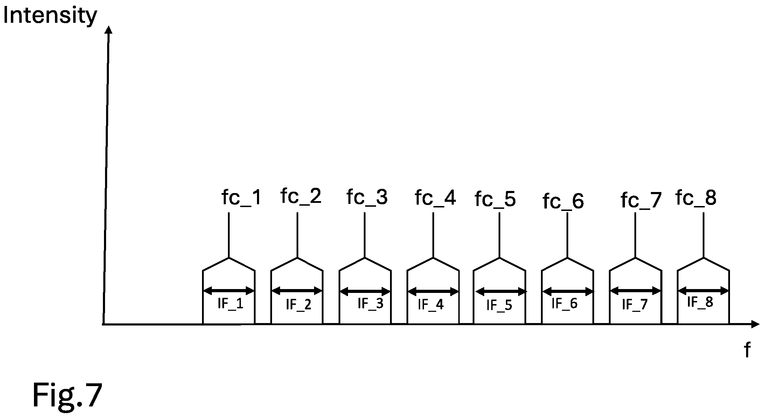

Figure 7 shows in an exemplary fashion the amplitude or intensity of n=8 carrier frequencies and the corresponding detection signals IF_1 - IF_n versus the frequency f.

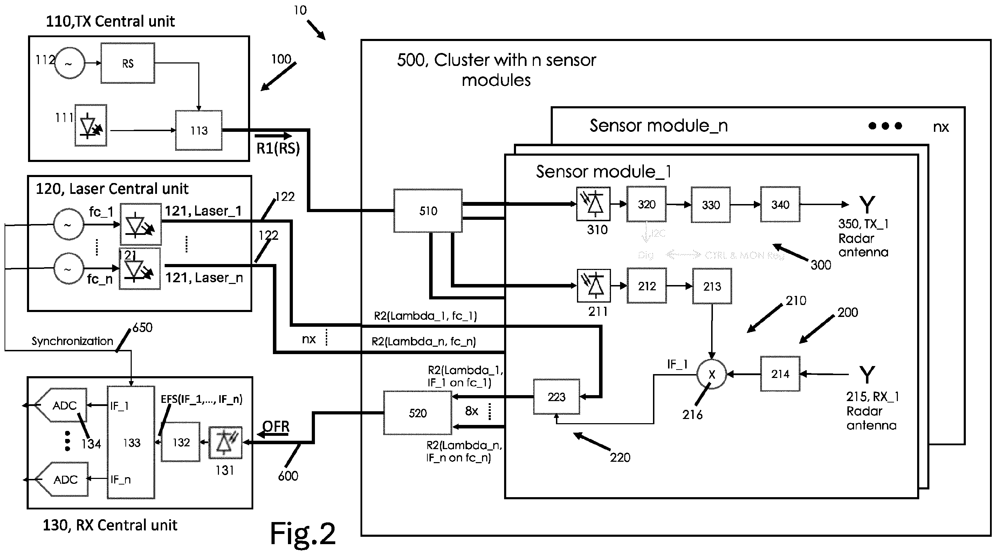

Figure 2 depicts a second exemplary embodiment of a radar system 10 according to the present invention.

In contrast to the first embodiment of Figure 1, the read-out radiation sources 121 of the second subunit 120 are already modulated with the antenna-individual electrical carrier frequency fc of the assigned antenna 215 of the assigned reception module 200. Each of the n read-out radiation sources 121 therefore provides an optical radiation R2 having an individual wavelength Lambda_1,...,Lambda_n and an antenna-individual electrical carrier frequency fc_1,...,fc_n.

Therefore, the modulator 223 of the reception modules 200 only needs to modulate the detection signal IF_1,...,IF_n of the respective antenna 215 onto the optical radiation R2 that is received from the second subunit 120. This modulation yields the modulated optical signal that is transmitted to the combiner (optical multiplexer) 520.

As a consequence, the frequency generator 221 and the mixer 222, as shown in Figure 1, may be omitted from the reporting path 220 of the reception modules 200 in Figure 2.

Furthermore, synchronization 650 between the second subunit 120 and the third subunit 130 may facilitate the demodulation of the electrical backchannel signal EFS to separate the detection signals IF_1,...,IF_n.

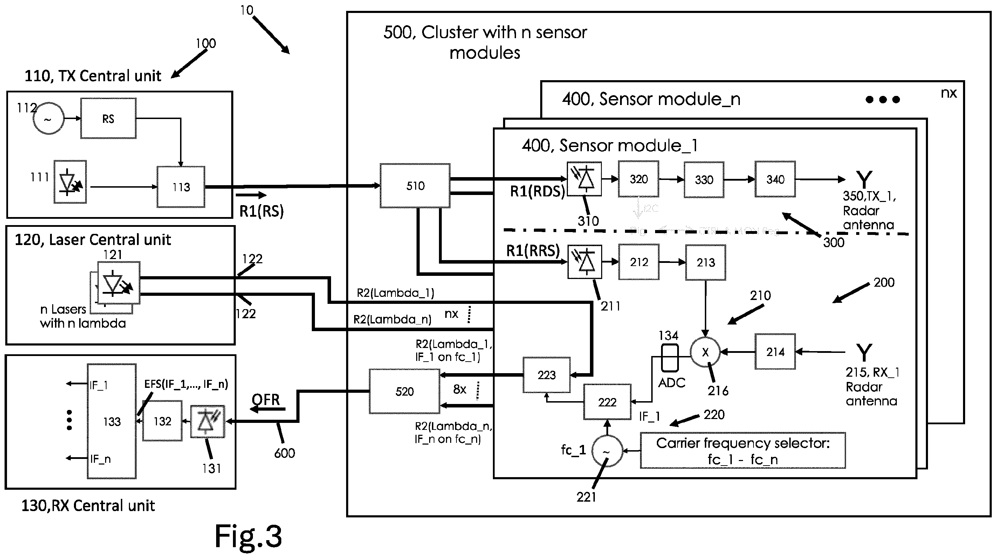

Figure 3 depicts a third exemplary embodiment of a radar system 10 according to the present invention.

In contrast to the first and second embodiment of Figures 1 and 2, the analog-digital conversion by analog-digital converters 134 is carried out inside the reception modules 200. As a consequence, the analog-digital converters 134, as shown in Figures 1 and 2, may be omitted from the third subunit 130.

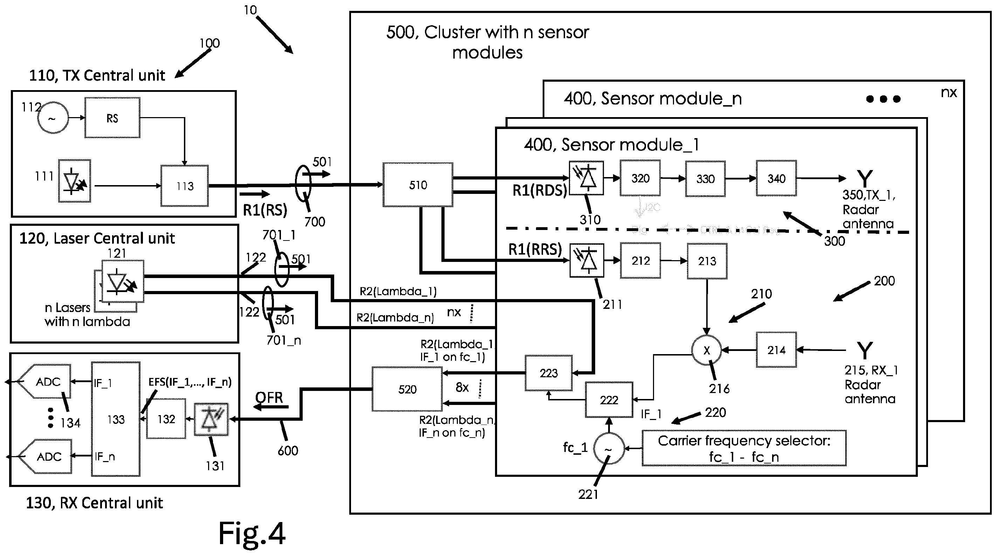

Figure 4 depicts a fourth exemplary embodiment of a radar system 10 according to the present invention.

In contrast to the embodiments of Figures 1-3, the central unit 100 cooperates with additional detections units 200 and additional transmission units 300 assigned to additional clusters 501.

To this end, the radar system 10 comprises an additional optical splitter 700 to provide the transmission units 300 of the additional clusters 501 with the laser driver signal RDS, and additional optical splitters 701_1, ..., 701_n to provide the reception units 200 of the additional clusters 501 with the optical radiations R2(Lambda_1,..., Lambda_n) from the n read-out radiation sources 121.

Furthermore, the radar system 10 comprises additional third subunits 130, at least one third subunit 130 for each cluster 501, and further optical backchannel waveguides (e.g. fibers) 600 to connect the third subunits 130 with the respective combiners 520 of the additional clusters 501.

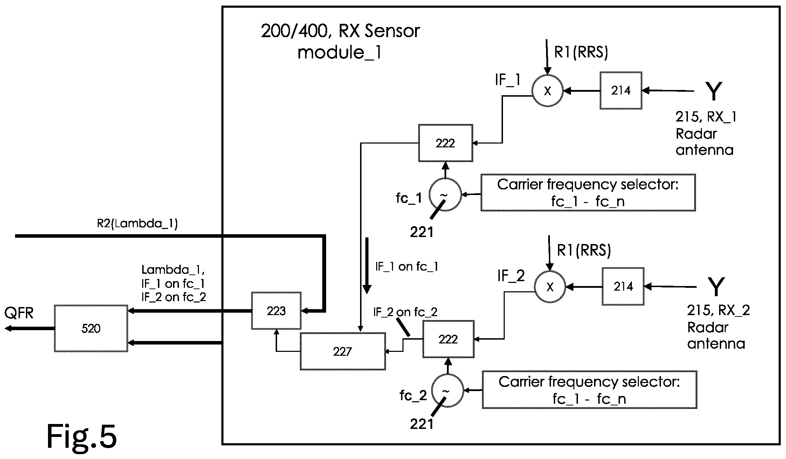

Figure 5 depicts another exemplary embodiment of a reception unit 200 that may be incorporated in any of the radar systems 10 shown in Figures 1-4.

The reception unit 200 comprises two or more antennas 215. The detection signals of these antennas 215 are electrically combined by an electrical signal combiner 222 (e. g. a mixer) in order to generate a combined electrical signal. The combined electrical signal modulates the modulator 223 which modulates both detection signals IF_1 and IF_2 of the respective antennas 215 and the antenna-individual electrical carrier frequencies fc_1 and fc_2 onto the optical radiation R2 that is received from the second subunit 120. This modulation yields a multiply modulated optical signal that is transmitted to the combiner (optical multiplexer) 520.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms 'first,' 'second,' 'third,' and so on are used to distinguish between items of the same kind. However, none of these terms imply a specific number of such items. These terms do not imply that all such entities items must be present. For example, the 'first' and 'fourth' items may be present even if the 'second' and 'third' are absent."

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution.

## Claims

1. Radar system (10) comprising a central unit (100), a first radar antenna (215), and a second radar antenna (215), wherein a first detection signal (IF_1) representing first radar information from the first antenna (215) and a second detection signal (IF_2) representing second radar information from the second antenna (215) are transmitted to the central unit (100),
**characterized in that**
the system (10) is configured to send the first detection signal (IF_1) and the second detection signal (IF_2) optically to the central unit (100) via optical backchannel radiation (OFR) that is transmitted through the same optical backchannel waveguide (600),
wherein the first detection signal (IF_1) is transmitted in a first frequency range defined by a first electrical carrier frequency (fc_1)),
wherein the second detection signal (IF_2) is transmitted in a second frequency range defined by a second electrical carrier frequency (fc_2)) which differs from the first electrical carrier frequency (fc_1)), and
wherein the central unit (100) is configured to receive the optical backchannel radiation (OFR) and distinguish the first detection signal (IF_1) from the received second detection signal (IF_2) based on their respective carrier frequencies (fc_1, fc_2)).

2. Radar system (10) of claim 1
wherein the optical backchannel radiation (OFR) comprises a first portion having a first optical wavelength (Lambda_1) and a second portion having a second optical wavelength (Lambda_2),
wherein the first detection signal (IF_1) is transmitted in the first portion, and
wherein the second detection signal (IF_2) is transmitted in the second portion.

3. Radar system (10) of claim 2
wherein the first radar antenna (215) is located in a first reception unit (200) and the second radar antenna (215) is located in a second reception unit (200),
wherein a first supply waveguide (122) supplies the first reception unit (200) with a first optical radiation (R2(Lambda_1) having a first optical wavelength (Lambda_1),
wherein a second supply waveguide (122) supplies the second reception unit (200) with a second optical radiation (R2(Lambda_2)) having a second optical wavelength (Lambda_2),
wherein the first reception unit (200) is configured to modulate the first detection signal (IF_1) onto the first optical radiation (R2(Lambda_1)), thereby generating a first modulated optical signal (R2(Lambda_1, IF_1 on fc_1)),
wherein the second reception unit (200) is configured to modulate the second detection signal (IF_2) onto the second optical radiation (R2(Lambda_2)), thereby generating a second modulated optical signal (R2(Lambda_2, IF_2 on fc_2)), and
wherein an optical combiner (520) combines the first modulated optical signal and the second modulated optical signal, thereby generating said optical backchannel radiation (OFR) that is transmitted through the backchannel waveguide (600) to the central unit (100).

4. Radar system (10) of claim 3
wherein the first optical radiation (R2(Lambda_1)) that is supplied by the first supply waveguide (122), is already modulated with the first electrical carrier frequency (fc_1)), and/or
wherein the second optical radiation (R2(Lambda_2)) that is supplied by the second supply waveguide (122), is already modulated with the second electrical carrier frequency (fc_2)).

5. Radar system (10) of claim 3
wherein the first reception unit (200) is configured to modulate both the first detection signal (IF_1) and the first electrical carrier frequency (fc_1)) onto the first optical radiation (R2(Lambda_1)), and/or
wherein the second reception unit (200) is configured to modulate both the second detection signal (IF_2) and the second electrical carrier frequency (fc_2)) onto the second optical radiation (R2(Lambda_2)).

6. Radar system (10) of any of the preceding claims
wherein the central unit (100) comprises
a first read-out radiation source (121) that provides the first optical radiation (R2(Lambda_1)) to the first reception unit (200) via the first supply waveguide (122), and
a second read-out radiation source (121) that provides the second optical radiation (R2(Lambda_2)) to the second reception unit (200) via the second supply waveguide (122).

7. Radar system (10) of any of the preceding claims
wherein the central unit (100) comprises at least one optical driver source (111) that provides optical radiation (R1) carrying a radar reference signal (RRS), said radar reference signal (RRS) being transmitted to said radar reception units (200).

8. Radar system (10) of any of the preceding claims
wherein the central unit (100) comprises a photodetector (131) for detecting the optical backchannel radiation (OFR) and generating an electrical backchannel signal (EFS), the electrical backchannel signal (EFS) comprising the first detection signal (IF_1) and the second detection signal (IF_2), and
wherein the central unit (100) comprises an electrical signal demodulator (133) separating the first detection signal (IF_1) from the second detection signal (IF_2) based on the first and second electrical carrier frequency (fc_1, fc_2)).

9. Radar system (10) of any of the preceding claims
wherein the first detection signal (IF_1) describes the frequency difference between the radar reference signal (RRS) and the radar radiation detected by the first antenna (215), and
wherein the second detection signal (IF_2) describes the frequency difference between the radar reference signal (RRS) and the radar radiation detected by the second antenna (215).

10. Radar system (10) of any of the preceding claims
wherein the first and second detection signal (IF_1, IF_2) are subjected to analog-digital conversion before transmission via the optical backchannel radiation (OFR) and said same optical backchannel waveguide (600).

11. Radar system (10) of any of the preceding claims,
wherein the first and second reception unit (200) belong to a plurality of reception units (200) each of which has an antenna (215),
wherein an individual electrical carrier frequency (fc_1,..., fc_n) is assigned to each antenna (215),
wherein the optical backchannel radiation (OFR) that is transmitted through the backchannel waveguide (600), comprises an individual optical wavelength (Lambda_1,..., Lambda_n) for each reception unit (200),
wherein each reception unit (200) sends the detection signal (IF_1,...,IF_n) of its antenna (215) to the combiner (520) via unit-individual optical radiation that has the individually assigned optical wavelength (Lambda_1,..., Lambda_n) and is modulated based on both the detection signal (IM_1,..., IM_n) of its antenna (215) and the corresponding electrical carrier frequency (fc_1,..., fc_n), and
wherein the combiner (520) forms the optical backchannel radiation (OFR) that is transmitted through the same optical backchannel waveguide (600).

12. Radar system (10) of claim 11
wherein one or more of the reception units (200) have two or more antennas (215), and
wherein each reception unit (200) sends the detection signals (IF) of its antenna (215) or antennas (215) to the central unit (100) via unit-individual radiation that has the individually assigned optical wavelength (Lambda_1,..., Lambda_n) and is modulated based on both the detection signals (IF_1,..., IF_n) and the corresponding electrical carrier frequencies (fc_1,..., fc_n) of its antennas.

13. Radar system (10) of any of the preceding claims,
wherein the first and second reception unit (200), said combiner (520), said optical backchannel waveguide (600), said photodetector (131) for detecting the optical backchannel radiation (OFR), and said demodulator (133) for separating the detection signals based on their carrier frequencies define a first cluster (500),
wherein the system comprises one or more further clusters (501), each of which includes a first and second reception unit (200), a combiner, an optical backchannel waveguide (600), a photodetector for detecting optical backchannel radiation (OFR), and a demodulator for separating the detection signals based on their carrier frequencies,
wherein - with respect to each cluster - each reception unit (200) has an antenna (215),
wherein - with respect to each cluster - an individual electrical carrier frequency is assigned to each antenna (215) of the respective cluster,
wherein - with respect to each cluster - the optical radiation that is transmitted through the backchannel waveguide (600) of the respective cluster, comprises an individual optical wavelength for each reception unit (200) of the respective cluster,
wherein each reception unit (200) sends the detection signal of its antenna (215) to the combiner of the respective cluster via unit-individual optical radiation that has the individually assigned optical wavelength and is modulated based on both the detection signal of its antenna (215) and the corresponding electrical carrier frequency, and
wherein the combiner of the respective cluster forms the optical backchannel radiation (OFR) of the respective cluster that is transmitted through the same optical backchannel waveguide (600) of the respective cluster.

14. Radar system (10) of claim 13,
wherein the first read-out radiation source (121) provides the first optical radiation (R2(Lambda_1, fc_1)) to the first reception units (200) of all of said clusters,
wherein the second read-out radiation source (121) provides the second optical radiation (R2(Lambda_2, fc_2)) to the second reception units (200) of all of said clusters, and
wherein the optical driver source (111) provides the optical radiation carrying the radar reference signal to the first and second reception unit (200) of all of said clusters.

15. Method of operating a radar system (10), for instance a radar system (10) according to any of the preceding claims,
wherein a first detection signal (IF_1) representing first radar information is transmitted from a first antenna (215) and a second detection signal (IF_2) representing second radar information is transmitted from a second antenna (215) to the central unit (100),
**characterized in that**
the first detection signal (IF_1) and the second detection signal (IF_2) are optically transmitted to the central unit (100) via optical backchannel radiation (OFR) that is transmitted through the same optical backchannel waveguide (600),
wherein the first detection signal (IF_1) is transmitted in a first frequency range defined by a first electrical carrier frequency (fc_1)),
wherein the second detection signal (IF_2) is transmitted in a second frequency range defined by a second electrical carrier frequency (fc_2)) which differs from the first electrical carrier frequency (fc_1)), and
wherein the central unit (100) is configured to receive the optical backchannel radiation (OFR) and distinguish the first detection signal (IF_1) from the received second detection signal (IF_2) based on their respective carrier frequencies.
